# EUROPEAN PATENT APPLICATION

(11) **EP 1 821 565 A2**
(43) Date of publication of application: **22.08.2007**
(21) Application number: 07100671.2
(22) Date of filing: 17.01.2007
(51) Int. Cl.: H04Q 7/38

(54) **Notification method according to conversion of communication service in mobile communication terminal**

(30) Priority: 15.02.2006 KR 20060014606
(71) Applicant: Samsung Electronics Co., Ltd., Suwon-si, Gyeonggi-Do (KR)
(72) Inventor: Doo, Kyeong-Yeon c/o Samsung Electronics Co., Gyeonggi-do (KR)
(74) Representative: Grünecker, Kinkeldey, Stockmair & Schwanhäusser Anwaltssozietät

(57) **Abstract**

Provided is a notification method according to conversion of a communication service in a mobile communication terminal. The notification method includes sensing the conversion of an ongoing communication service implemented in a first mobile communication terminal, transmitting a service stop signal notifying the stop of the communication service to a second mobile communication terminal that is connected with the first mobile communication terminal and implements with the communication service, and stopping the ongoing communication service implemented with the first mobile communication terminal in response to the service stop signal at the second mobile communication terminal.

## Description

The present invention generally relates to a mobile communication terminal, and in particular, to a notification method according to conversion of a communication service mode in a mobile communication terminal.

The European 2^{nd} Generation (2G) communication service uses a Global System for Mobile Communication (GSM) providing a circuit call service that allows only voice communication and a General Packet Radio Service (GPRS) providing a packet call service that allows high-speed Internet and several types of video communication. However, since the circuit call service and the packet call service cannot be implemented at the same time, if an event, such as the reception of a call, occurs during execution of the packet call service that implements high-speed Internet or video communication, a mobile communication terminal pauses the packet call service and executes the circuit call service for connection to the call and implementation of a call mode.

A Wideband Code Division Multiple Access (WCDMA) scheme implements the circuit call service and the packet call service at the same time. When both the circuit call service and the packet call service are implemented in a WCDMA network, if a handover to a GSM or GPRS network occurs due to movement of a mobile communication terminal, the packet call service implemented in the WCDMA network is stopped.

Thus, if a call from a third-party mobile communication terminal in a user terminal or a partner terminal is sensed during the use of a packet call service, such as a messenger in a GPRS network, a user can recognize the stop of the packet call service, the user's counterpart cannot recognize the stop of the packet call service. If a handover to a GPRS network occurs during the use of both voice communication and the packet call service in a WCDMA network, a voice communication mode can be continuously implemented, but the ongoing packet call service is stopped. As a result, the user can recognize the stop of the packet call service, but the counterpart cannot recognize the stop of the packet call service.

It is, therefore, the object of the present invention to provide a notification method based on the conversion of a communication service mode in a mobile communication terminal for a smooth communication service between users.

This object is solved by the invention as claimed in the independent claims.

Embodiments are specified in the dependent claims.

According to one aspect of the present invention, there is provided a notification method based on a change in a communication service in a mobile communication terminal. The notification method includes sensing a change in an ongoing communication service implemented in a first mobile communication terminal, transmitting to a second mobile communication terminal that is connected with the first mobile communication terminal and implementing a communication service a service stop signal notifying the communication service, and terminating the ongoing communication service implemented with the first mobile communication terminal in response to the service stop signal at the second mobile communication terminal.

The above and other objects, features and advantages of the present invention will become more apparent from the following detailed description when taken in conjunction with the accompanying drawings in which:
FIG. 1 is a block diagram of a wireless communication system to which the present invention is applied;
FIG. 2 is an operational flowchart of a notification method according to the present invention; and
FIG. 3 is an operational flowchart of a notification method according to the present invention.

Preferred embodiments of the present invention will now be described in detail with reference to the drawings. In the following description, a detailed description of known functions and configurations incorporated herein has been omitted for conciseness.

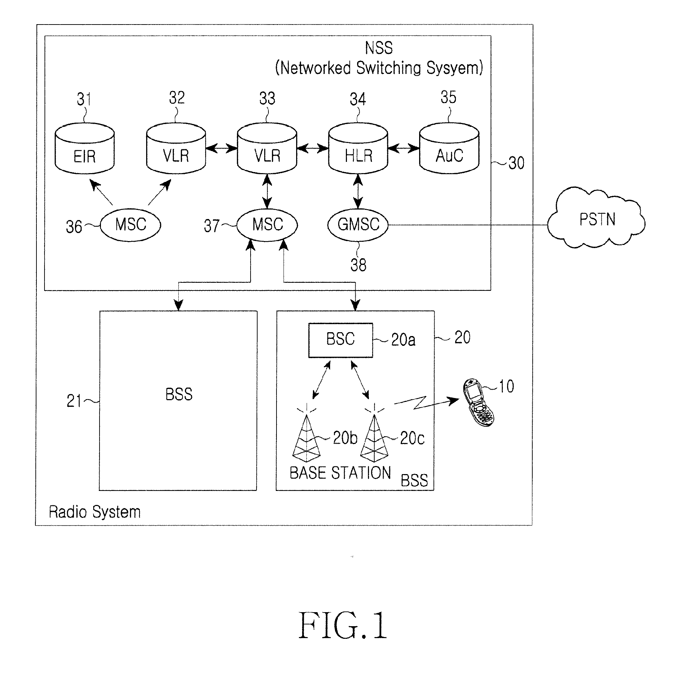

FIG. 1 is a block diagram of a wireless communication system to which the present invention is applied. Although a GSM network is used as an example in FIG. 1, the present invention can also be applied to services implemented in a GSM network, a GPRS network, and a WCDMA network. Thus, in the present invention, only a GSM network for implementing a basic circuit call service will be described and a description regarding a GPRS network and a WCDMA network will not be provided.

Referring to FIG. 1, a Mobile Station 10 includes a terminal device and a Subscriber Identity Module (SIM) for storing personal information such as user information of the terminal device, which is not shown in FIG. 1. The mobile station 10 has a unique International Mobile Station Equipment Identity (IMEI). The SIM includes an International Mobile Subscriber Identity (IMSI), and the IMEI and the IMSI are used to guarantee the user's personal mobility. If sensing the occurrence of a circuit call service event during the implementation of a packet call service in a GSM/GPRS network, the MS 10 sends a packet call service stop message signaling the stop of the ongoing packet call service to a partner terminal (hereinafter referred to as a second mobile communication terminal) that implements the packet call service with a user terminal (hereinafter referred to as a first mobile communication terminal). Thus, the second mobile communication terminal terminates the ongoing packet call service or implements a standby state in response to the packet call service stop message received from the first mobile communication terminal.

The MS 10 according to another embodiment of the present invention senses a handover to a GPRS network from a WCDMA network in which a packet call service with the second mobile communication terminal and a circuit call service with a third mobile communication terminal are implemented at the same time. The MS 10 also stops the ongoing packet call service according to the sensed handover and sends the packet call service stop message signaling the stop of the packet call service to the second mobile communication terminal.

Base Station Subsystems (BSSs) 20 and 21 each include a Base Station Controller (BSC) 20a and Base Transceiver Stations (BTSs) 20b and 20c. The BTSs 20b and 20c transceive a signal for implementing communication between the MS 10 and a server. The BSC 20a manages a plurality of BTSs 20b and 20c and handles setup of a radio channel and a handover. The BSC 20a connects a Mobile Switching Center (MSC) 37 included in a Networked Switching System (NSS) 30 and the BTSs 20b and 20c.

The NSS 30 includes MSCs 36 and 37, a Gateway MSC (GMSC) 38, an Equipment Identity Register (EIR) 31, Visitor Location Registers (VLRs) 32 and 33, a Home Location Register (HLR) 34, and an Authentication Center (AuC) 35. The MSCs 36 and 37 are similar to a switching center of a Public Switched Telephone Network (PSTN) and implement mobility management, location registration/management, authentication, handover, and roaming.

The HLR 34 and the VLRs 32 and 33 also provide call routing and roaming functions. In particular, the HLR 34 contains subscriber information and terminal location information. The location information of the MS 10 is included in the addresses of the VLRs 32 and 33. The VLRs 32 and 33 store a portion of information of the HLR 34 (i.e., the current location of the MS 10). Call control is performed using the current location of the MS 10 stored in the VLRs 32 and 33 and information associated with a service offer is included.

The EIR 31 is a database for determining validity of a terminal and includes IMEI information. If it is verified that the IMEI of a mobile communication terminal is lost or stolen, an access to a network can be denied. The AuC 35 is a database for storing information associated with an authentication key included in the SIM.

Although the structure of the GSM network is described above, a function unit for executing the packet call service may be added to the structure to implement a GPRS network.

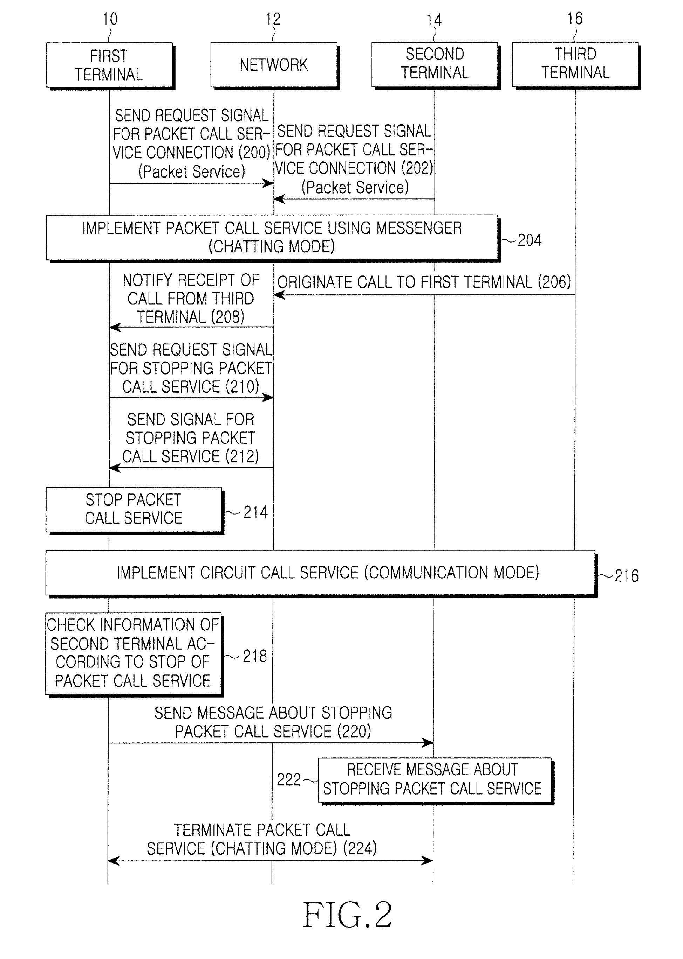

FIG. 2 is an operational flowchart of a notification method according to the present invention. In the present invention, a user mobile communication terminal is a first terminal 10, a partner mobile communication terminal that implements a packet call service with the user is a second terminal 14, and a mobile communication terminal that sends a call to the first terminal 10 is a third terminal 16. Referring to FIG. 2, the first terminal 10 transmits a packet call service connection signal for implementing Internet or video communication to a network 12 in step 200. In the present invention, the first terminal 10 performs packet data transmission and reception with the second terminal 14 using a messenger. The network 12 senses reception of the packet call service connection signal from the first terminal 10 and calls the second terminal 14 designated as the partner mobile communication terminal with which the first terminal 10 would perform the messenger service. The network 12 then senses a response signal with respect to the call from the second terminal 14 and the packet call service connection signal in step 202.

The first terminal 10 and the second terminal 14 implement a chatting mode corresponding to a packet call service using the messenger in step 204. The chatting mode is a communication method for real-time transmission and reception of text data between each mobile communication terminal. During the implementation of the chatting mode between the first terminal 10 and the second terminal 14 using the messenger service, the network 12 senses the origination of a call from the third terminal 16 to the first terminal 10 in step 206. Thus, the network 12 sends a signal notifying the origination of a call from the third terminal 16 to the first terminal 10 in step 208. Since the first terminal 10 cannot execute the packet call service and a circuit call service for voice communication at the same time, the first terminal 10 sends to the network 12 a signal requesting to stop the ongoing packet call service corresponding to the chatting mode with the second terminal 14.

The network 12 sends a response signal to stop the packet call service implemented with the second mobile communication terminal to the first terminal 10 in response to the request signal received from the first terminal 10 in step 212. The first terminal 10 stops the ongoing packet call service implemented with the second terminal 14 in response to the response signal received from the network 12 in step 214. The first terminal 10 implements the circuit call service for implementing voice communication with the third terminal 16 according to the implementation of a response to the call received from the third terminal 16 in step 216. At this time, the first terminal 10 checks information of the second terminal 14 stored in the first terminal 10 to transmit the packet call service stop message to the second terminal 14 in response to the stop of the packet call service implemented with the second terminal 14 in step 218.

The first terminal 10 transmits the packet call service stop message notifying to stop the packet call service implemented in step 204 to the second terminal 14 according to the check result in step 220. The packet call service stop message may be transmitted using a Short Message Service (SMS) and the contents of the packet call service stop message may be input directly by the user and/or previously stored in a memory of the first terminal 10. Thus, in step 224, the second terminal 14 receiving the packet call service stop message from the first terminal 10 can recognize the stop of the packet call service implemented in step 204 and thus terminates connection with the first terminal 10 connected through the network 12.

Thus, in the notification method according to the present invention, if the first terminal 10 receives a call from the third terminal 16 while implementing the packet call service with the second terminal 14, the first terminal 10 stops the ongoing packet call service and connects to the call from the third terminal 16. The first terminal 10 then transmits the packet call service stop message to the second terminal 14 to allow the user of the second terminal 14 to recognize the stop of the packet call service.

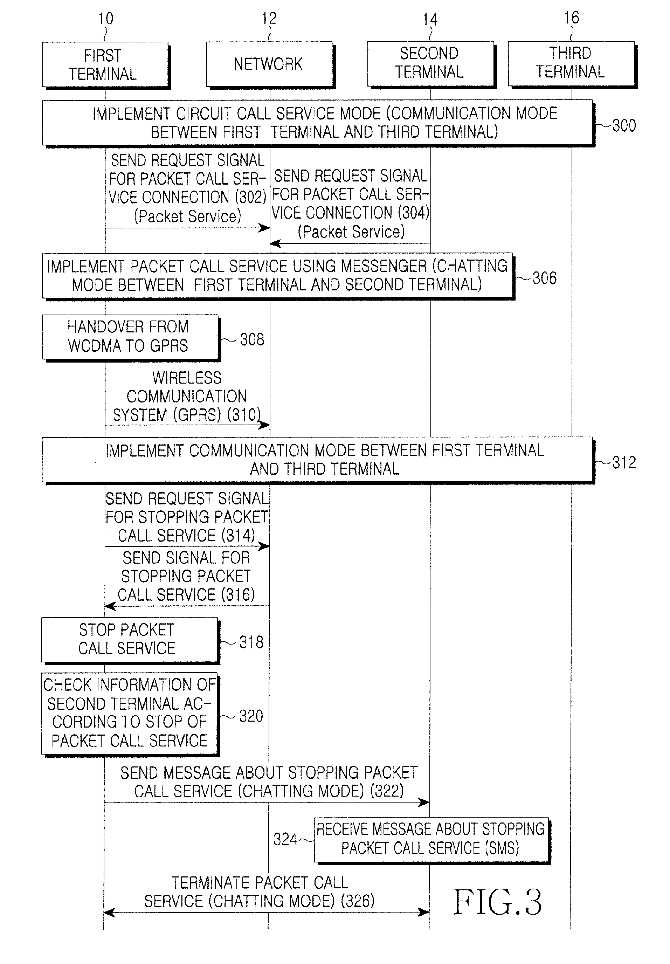

FIG. 3 is an operational flowchart of a notification method according to another embodiment of the present invention. Referring to FIG. 3, the first terminal 10 implements a circuit call service mode corresponding to a voice communication mode with the third terminal 16 over the WCDMA network in step 300. In step 302, the first terminal 10 transmits to the network 12 a packet call service connection request signal for implementing a messenger service with the second terminal 14 while implementing the circuit call service mode with the third terminal 16. The network 12 then calls the second terminal 14 in response to the packet call service connection request signal from the first terminal 10 as described with reference to FIG 2. The called second terminal 14 sends a response signal with respect to a signal corresponding to the call from the first terminal 10 to the network 12 in step 304. Thus, the first terminal 10 and the second terminal 14 implement the packet call service in step 306.

Thus, the first terminal 10 implements the circuit call service for voice communication with the third terminal 16 and implements the packet call service for transmission and reception of text data using a messenger service with the second terminal 14. At this time, if the first terminal 10 senses a handover from the WCDMA network to the GPRS network in step 308, the first terminal 10 performs synchronization according to the conversion of a communication network in step 310. The first terminal 10 continues implementing the circuit call service of step 300 with the third terminal 16 even after the synchronization. The first terminal 10 sends a packet call service stop request signal requesting to stop the packet call service of step 306 corresponding to the messenger mode implemented with the second terminal 14 to the network 12 in step 314. The network 1 then sends a response signal with respect to the packet call service stop request signal to the first terminal 10 in step 316. The first terminal 10 stops the packet call service in response to the response signal from the network 12 in step 318.

Thus, the first terminal 10 checks information of the second terminal 14 that implements the packet call service with the first terminal 10 using the messenger service according to the stop of the packet call service in step 320. The first terminal 10 transmits a packet call service stop message notifying the stop of the ongoing packet call service to the second terminal 14 according to the checked information of the second terminal 14 in step 322. The packet call service stop message may be transmitted to the second terminal 14 using the SMS. In step 326, the second terminal 14 receiving the packet call service stop message can recognize the stop of the ongoing packet call service of step 306 and thus terminates connection to the first terminal 10 connected through the network 12.

In the notification method according to the present invention, the first terminal 10 senses movement to the GPRS network while implementing the circuit call service and the packet call service at the same time in the WCDMA network. Since the ongoing circuit call service can be continuously implemented but the packet call service cannot be implemented, the first terminal 10 sends the packet call service stop message to the second terminal 14 implementing the packet call service. The user of the second terminal 14 can recognize the stop of the packet call service.

As described above, according to the present invention, a mobile communication terminal sends a message to its partner mobile communication terminal based on a change in the ongoing service, thereby allowing the user of the partner mobile communication terminal to easily recognize the service conversion.

While the present invention has been shown and described with reference to preferred embodiments thereof, it will be understood by those skilled in the art that various changes in form and details may be made therein without departing from the scope of the invention. Although the second mobile communication terminal terminates the packet call service upon receipt of the packet call service message in the present invention, it may continue implementing the packet call service with the first mobile communication terminal without terminating the packet call service if recognizing that the first mobile communication terminal can resume the packet call service. Accordingly, the scope of the invention should be defined by the appended claims.

## Claims

1. A notification method based on a change in a communication service in a mobile communication terminal, the notification method comprising the steps of:
sensing a change in an ongoing communication service implemented in a first mobile communication terminal;
transmitting to a second mobile communication terminal that is connected with the first mobile communication terminal and implementing a communication service a service stop signal notifying of the second mobile communication terminal of an end to the communication service; and
the second mobile communication terminal stopping the ongoing communication service implemented with the first mobile communication terminal in response to the service stop signal.

2. The notification method of claim 1, wherein the service stop signal is a Short Message Service, SMS, message.

3. The notification method of claim 1 or 2, further comprising the steps of:
implementing a packet call service between the first mobile communication terminal and the second mobile communication terminal; and
receiving by the first mobile communication terminal a call from a third mobile communication terminal while implementing the packet call service and sensing a change in the packet call service.

4. The notification method of one of claims 1 to 3, wherein if the first mobile communication terminal is handed over from a Wideband Code Division Multiple Access, WCDMA, where a packet call service and a circuit call service are implemented at the same time to a General Packet Radio Service, GPRS, network, the first mobile communication terminal senses a change in the ongoing communication service.

5. The notification method of claim 4, wherein if the first mobile communication terminal is handed over, the packet call service is stopped.

6. The notification method of one of claims 1 to 5, wherein if the second mobile communication terminal receives the service stop signal, the second mobile communication terminal stops the ongoing communication service.

7. The notification method of one of claims 1 to 6, further comprising the steps of:
pausing by the second mobile communication terminal the ongoing communication service upon receipt of the service stop signal; and
operating by the second mobile communication terminal in a standby mode until the communication service implemented with the first mobile communication terminal is resumed.

8. A mobile communication system comprising a first and second mobile communication terminal adapted to perform the notification method according to one of claims 1 to 7.
